# EUROPEAN PATENT APPLICATION

(11) **EP 4 734 347 A1**
(43) Date of publication of application: **29.04.2026**
(21) Application number: 24719868.2
(22) Date of filing: 16.04.2024
(51) Int. Cl.: H02M 3/158

(54) **POWER SOURCE CIRCUIT AND POWER SOURCE SYSTEM**

(30) Priority: 21.06.2023 CN 202310744305
(71) Applicant: Shanghai Startorus Fusion Technology Company Limited, Shanghai 201808 (CN); Tsinghua University, Beijing 100084 (CN)
(72) Inventor: SONG, Zichong, Beijing 100084 (CN); CHEN, Rui, Shanghai 201808 (CN); CHANG, Tingzhi, Beijing 100084 (CN); WANG, Binbin, Beijing 100084 (CN); WANG, Shouzhi, Beijing 100084 (CN); TAN, Yi, Shanghai 201808 (CN)
(74) Representative: Keltie LLP
(86) International application number: PCT/CN2024/088104
(87) International publication number: WO 2024/260088

(57) **Abstract**

A power circuit and a power system are provided according to embodiments of the present disclosure. The circuit comprises a first power supply capacitor, a first bridge output unit, a second power supply capacitor, and a second bridge output unit. The first bridge output unit and the second bridge output unit each includes two bridge arms, each of which includes at least one switch transistor, and the first bridge output unit is connected to an output terminal of the second bridge output unit. The first power supply capacitor is configured to supply a first input voltage to the first bridge output unit, the second power supply capacitor is configured to supply a second input voltage to the second bridge output unit. The first bridge output unit is configured to adjust the first input voltage through the at least one switch transistor on the bridge arm, and output the adjusted first input voltage as a first output voltage, and the second bridge output unit is configured to adjust the second input voltage through the at least one switch transistor on the bridge arm, and output the adjusted second input voltage as a second output voltage.

## Description

The present disclosure claims priority to Chinese Patent Application No. 202310744305.2, titled "POWER CIRCUIT AND POWER SYSTEM", filed on June 21, 2023 with the National Intellectual Property Administration, PRC, which is incorporated herein by reference in its entirety.

### FIELD

The present disclosure relates to the field of power electronics technology, and in particular to a power circuit and a power system.

### BACKGROUND

At present, in the plasma physics experimental device such as the Experimental and Advanced Superconducting Tokamak (EAST) nuclear fusion experimental device, plasma is generally generated and constrained via a magnetic field coil. For example, a displacement signal generated by plasma drift is tracked in real-time by an output circuit under the control of a power supply, to supply an excitation current to a magnetic field coil inside a vacuum chamber, so as to form a magnetic field to maintain dynamic balance and accurate position of the plasma in a non-circular cross-section, so that a rapid drift of the plasma in a large elongated shape can be suppressed. Therefore, in the plasma physics experimental device, the magnetic field coil is required to have strong current control and feedback capabilities, that is, a power supply that can quickly and flexibly control an output current and an output voltage is required.

### SUMMARY

In view of this, a power circuit and a power system are provided according to embodiments of the present disclosure, in which the output voltage and the output current are controlled through a power supply capacitor interacting with a bridge output unit, facilitating rapid control of the plasma subsequently, thus eliminating technical defects in the conventional technology.

In a first aspect of the embodiments of the present disclosure, a power circuit is provided, which includes a first power supply capacitor, a first bridge output unit connected to the first power supply capacitor, a second power supply capacitor, and a second bridge output unit connected to the second power supply capacitor. Each of the first bridge output unit and the second bridge output unit includes two bridge arms, each of the bridge arms includes at least one switch transistor, and the first bridge output unit is connected to an output terminal of the second bridge output unit. The first power supply capacitor is configured to supply a first input voltage to the first bridge output unit. The second power supply capacitor is configured to supply a second input voltage to the second bridge output unit. The first bridge output unit is configured to adjust the first input voltage through the at least one switch transistor on the bridge arm, and output the adjusted first input voltage as a first output voltage, and the second bridge output unit is configured to adjust the second input voltage through the at least one switch transistor on the bridge arm, and output the adjusted second input voltage as a second output voltage.

In an embodiment, the first bridge output unit includes a first bridge arm and a second bridge arm connected in parallel, the first bridge arm includes a first switch transistor and a first freewheeling diode connected in series, and the second bridge arm includes a second switch transistor and a second freewheeling diode connected in series. The second bridge output unit includes a third bridge arm and a fourth bridge arm connected in parallel, the third bridge arm includes a third switch transistor and a third freewheeling diode connected in series, and the fourth bridge arm includes a fourth switch transistor and a fourth freewheeling diode connected in series.

In an embodiment, the first bridge output unit is configured to adjust the first input voltage through the first switch transistor on the first bridge arm and/or the second switch transistor on the second bridge arm, and output the adjusted first input voltage as the first output voltage. The second bridge output unit is configured to adjust the second input voltage through the third switch transistor on the third bridge arm and/or the fourth switch transistor on the fourth bridge arm, and output the adjusted second input voltage as the second output voltage.

In an embodiment, an emitter of the first switch transistor is connected to a cathode of the first freewheeling diode, a collector of the first switch transistor is connected to a cathode of the second freewheeling diode. An emitter of the second switch transistor is connected to an anode of the first freewheeling diode, and a collector of the second switch transistor is connected to an anode of the second freewheeling diode. An emitter of the third switch transistor is connected to a cathode of the third freewheeling diode, a collector of the third switch transistor is connected to a cathode of the fourth freewheeling diode. An emitter of the fourth switch transistor is connected to an anode of the third freewheeling diode, and a collector of the fourth switch transistor is connected to an anode of the fourth freewheeling diode.

In an embodiment, a connection point between the first switch transistor and the first freewheeling diode serves as a first positive output terminal of the first bridge output unit, and a connection point between the second switch transistor and the second freewheeling diode serves as a first negative output terminal of the first bridge output unit. A connection point between the third switch transistor and the third freewheeling diode serves as a second positive output terminal of the second bridge output unit, and a connection point between the fourth switch transistor and the fourth freewheeling diode serves as a second negative output terminal of the second bridge output unit.

In an embodiment, the first positive output terminal serves as a positive circuit output terminal, the first negative output terminal is connected to the second positive output terminal, and the second negative output terminal serves as a negative circuit output terminal.

In an embodiment, a positive electrode of the first power supply capacitor is connected to the collector of the first switch transistor, and a negative electrode of the first power supply capacitor is connected to the emitter of the second switch transistor. A positive electrode of the second power supply capacitor is connected to the collector of the third switch transistor, and a negative electrode of the second power supply capacitor is connected to the emitter of the fourth switch transistor.

In an embodiment, the power circuit further includes a first rectifier diode and a second rectifier diode. The first rectifier diode is connected with the first power supply capacitor in parallel, and the second rectifier diode is connected with the second power supply capacitor in parallel.

In an embodiment, the power circuit further includes a first charging unit and a second charging unit. The first charging unit is connected with the first power supply capacitor in parallel, and the second charging unit is connected with the second power supply capacitor in parallel.

In an embodiment, the power circuit further includes a control unit, which is connected to the first bridge output unit and the second bridge output unit. The control unit is configured to send a control signal to each of the first bridge output unit and the second bridge output unit, where the control signal is used to control an operating state of a switch transistor in the first bridge output unit and/or the second bridge output unit.

According to the second aspect of the embodiments of the present disclosure, a power system is provided, which includes the aforementioned power circuit, and a load.

From the above technical solution, it can be seen that a power circuit is provided according to the present disclosure, which includes a first power supply capacitor, a first bridge output unit connected to the first power supply capacitor, a second power supply capacitor, and a second bridge output unit connected to the second power supply capacitor. Each of the first bridge output unit and the second bridge output unit includes two bridge arms, each of the bridge arms includes at least one switch transistor, and the first bridge output unit is connected to an output terminal of the second bridge output unit. The first power supply capacitor is configured to supply a first input voltage to the first bridge output unit. The second power supply capacitor is configured to supply a second input voltage to the second bridge output unit. The first bridge output unit is configured to adjust the first input voltage through the at least one switch transistor on the bridge arm, and output the adjusted first input voltage as a first output voltage, and the second bridge output unit is configured to adjust the second input voltage through the at least one switch transistor on the bridge arm, and output the adjusted second input voltage as a second output voltage.

According to the embodiments of the present disclosure, the first power supply capacitor and the second power supply capacitor are used as energy storage units, and the input voltage is adjusted by using the first bridge output unit and the second bridge output unit, thereby flexibly controlling the output voltage. The circuit structure is relatively simple, easy to implement, and has high reliability.

### BRIEF DESCRIPTION OF THE DRAWINGS

In order to describe the embodiments of the present disclosure or technical solutions in the conventional technology, drawings required in description of the embodiments or conventional technology are described briefly below. It is apparent that the drawings in the following description only show embodiments of the present disclosure. For those skilled in the art, other drawings may be obtained based on the disclosed drawings without creative effort.
Figure 1 is a schematic diagram of a power circuit according to an embodiment of the present disclosure; and
Figure 2 is a schematic diagram of a power system according to an embodiment of the present disclosure.

Reference signs are listed as follows.
102- First power supply capacitor, 104- First rectifier diode, 20- First bridge output unit, 202- First switch transistor, 204- First freewheeling diode, 206- Second freewheeling diode, 208- Second switch transistor, 302- Second power supply capacitor, 304-Second rectifier diode, 40- Second bridge output unit, 402- Third switch transistor, 404- Third freewheeling diode, 406- Fourth freewheeling diode, 408- Fourth switch transistor, 50- Load, 60- Power system, 602- Power circuit, 604- Load.

### DETAILED DESCRIPTION OF EMBODIMENTS

Many specific details are described in the following description to fully understand the present disclosure. However, the present disclosure may be implemented in many ways different from that described herein, and those skilled in the art may make similar promotions without violating the content of the present disclosure. Therefore, the present disclosure is not limited by the embodiments described below.

The terms used in one or more embodiments of the present disclosure are only for the purpose of describing specific embodiments and are not intended to limit the one or more embodiments of the present disclosure. The singular forms of "one", "said", and "the" used in one or more embodiments of the present disclosure and the claims are also intended to include the majority form, unless otherwise indicated clearly in the context. It should be understood that the terms "and/or" used in one or more embodiments of the present disclosure refer to and include any or all possible combinations of one or more associated listed items.

It should be understood that although various information may be described by using terms such as "first", "second" in one or more embodiments of the present disclosure, such information should not be limited to these terms. These terms are only used to distinguish information of the same type from each other. For example, without departing from the scope of one or more embodiments of the present disclosure, the "first" may also be referred to as the "second", and the "second" may also be referred to as the "first". Depending on the context, the word "if" used herein may be interpreted as "when" or "in a case that" or "in response to determining".

At present, in a plasma physics experimental device, for example, a Tokamak experimental device, plasma is generally generated and constrained by using a magnetic field coil. The current in a magnetic field coil is generally supplied by a pulse power system, and the plasma physics experimental device generally includes: a Toroidal Field (TF) coil, a Polar Field (PF) coil, and the like. The PF coil plays a main role in constraining the plasma. Through the PF coil, the position of the plasma in the vacuum chamber may be controlled, and complex parameter control can be performed on the plasma. Therefore, the PF coil is required to have strong current control and feedback capabilities. The conventional physical experimental device is generally power-supplied by an Alternating Current-Direct Current (AC-DC) converter system such as the grid power supply or a flywheel motor. However, this kind of system generally requires a high load capacity of the power supply, and the circuit structure thereof is complex, which results in a high cost.

Based on this, a power circuit is provided according to the present disclosure, which may be applied to the plasma physics experimental device to supply the required voltage and current to the plasma physics experimental device, to solve the problems of complex circuit structure and high cost of the power circuit in the conventional plasma physics experimental device. The technical solution in the embodiments of the present disclosure will be described clearly and completely in the following in conjunction with the drawings. It is apparent that the described embodiments are only a part of, rather than all of the embodiments of the present disclosure. Based on the embodiments in the present disclosure, all other embodiments obtained by those skilled in the art without creative work should fall within the protection scope of the present disclosure.

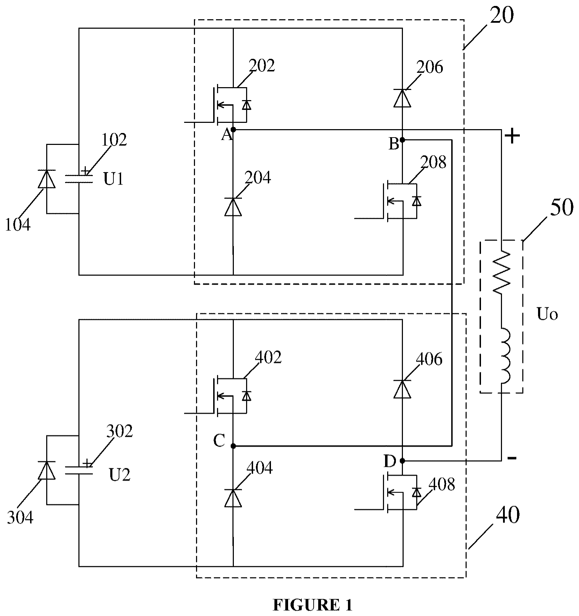

Reference is made to Figure 1, which is a schematic diagram of a power circuit according to an embodiment of the present disclosure. The circuit includes a first power supply capacitor 102, a first bridge output unit 20 connected to the first power supply capacitor 102, a second power supply capacitor 202, and a second bridge output unit 40 connected to the second power supply capacitor. Each of the first bridge output unit 20 and the second bridge output unit 40 includes two bridge arms, each of the bridge arms includes at least one switch transistor, and the first bridge output unit 20 is connected to an output terminal of the second bridge output unit 40. The first power supply capacitor 102 is configured to supply a first input voltage to the first bridge output unit 20, and the second power supply capacitor 202 is configured to supply a second input voltage to the second bridge output unit 40.

In practice, during a discharge process of the plasma physics experimental device, a rapid increase in the current is required in an initial stage. When the current reaches a certain value, the power supply is required to discharge continually and slowly. Therefore, the requirement of the plasma physics experimental device may be considered as that a power supply is required to supply a rapidly increasing output current, and continually supply a sustained and gentle output current after a period of time. Under this requirement, the power circuit according to the present disclosure supplies power through the first power supply capacitor and the second power supply capacitor that are connected in a hybrid cascaded manner.

In an implementation, the first power supply capacitor and the second power supply capacitor serve as energy storage units, and supply input voltages respectively to the first bridge output unit and the second bridge output unit. In Figure 1, an input capacitance voltage of the first power supply capacitor is represented by U1, and an input capacitance voltage of the second power supply capacitor is represented by U2. The first power supply capacitor supplies the first input voltage U1 to the first bridge output unit, and the second power supply capacitor supplies the second input voltage U2 to the second bridge output unit. In practice, in the power circuit, the first power supply capacitor is an electrolytic capacitor, and the second power supply capacitor is a supercapacitor. The supercapacitor has a higher capacity than the electrolytic capacitor, and the supercapacitor not only has the feature of fast charging and discharging of a capacitor, but also has energy storage characteristics of a battery. Therefore, in an embodiment of the present disclosure, a second input voltage supplied by the second power supply capacitor is much greater than the first input voltage supplied by the first power supply capacitor. An output voltage supplied to a load subsequently mainly depends on the second input voltage supplied by the second power supply capacitor. By using two power supply capacitors as energy storage units, the charging and discharging of the capacitors may be performed through mature programmable DC power supply and resistance discharge system, achieving efficient energy conversion.

In a case that the first power supply capacitor supplies the first input voltage to the first bridge output unit, the first bridge output unit may adjust the first input voltage through the at least one switch transistor on the bridge arm. Specifically, the first bridge output unit 20 is configured to adjust the first input voltage through the at least one switch transistor on the bridge arm and output the adjusted first input voltage as a first output voltage.

Correspondingly, in a case that the second power supply capacitor supplies a second input voltage to the second bridge output unit, the second bridge output unit may also adjust the second input voltage through the at least one switch transistor on the bridge arm. Specifically, the second bridge output unit 20 is configured to adjust the second input voltage through at least one switch transistor on the bridge arm and output the adjusted second input voltage as a second output voltage.

In practice, the first bridge output unit is a high-voltage bridge unit module supplied by an electrolytic capacitor, and is configured to supply a current of a high change rate, and the second bridge output unit is a low-voltage bridge unit module supplied by a supercapacitor, and is configured to supply a flat top current. Specifically, as shown in Figure 1, each of the first bridge output unit and the second bridge output unit includes two bridge arms, each of the bridge arms includes a switch transistor and a diode. The output voltage and the output current may be controlled by controlling an operating state of the switch transistor in the bridge output unit.

In an implementation, the first bridge output unit includes a first bridge arm and a second bridge arm connected in parallel. The first bridge arm includes a first switch transistor and a first freewheeling diode connected in series, and the second bridge arm includes a second switch transistor and a second freewheeling diode connected in series. The second bridge output unit includes a third bridge arm and a fourth bridge arm connected in parallel. The third bridge arm includes a third switch transistor and a third freewheeling diode connected in series. The fourth bridge arm includes a fourth switch transistor and a fourth freewheeling diode connected in series.

The switch transistors in the first bridge output unit and the second bridge output unit are insulated gate bipolar transistors (IBGTs). As a switching device, when compared the IGBT switch transistor with the conventional thyristor and the like, the conventional thyristor may be turned on easily but requires a specialized designed circuit to control to be turned off, which is unsuitable for circuits with high control requirements for input voltage, while the IBGT switch transistor has the advantages of fully controlled switching, simple driving, high switching frequency and the like, which is suitable for use in series connection and parallel connection to improve capacity.

In practice, the first bridge output unit 20 includes a first bridge arm and a second bridge arm. Each bridge arm in the first bridge output unit includes a switch transistor and a freewheeling diode connected in series. As shown in Figure 1, the first switch transistor 202 and the first freewheeling diode 204 form the first bridge arm of the first bridge output unit 20, and the second switch transistor 208 and the second freewheeling diode 206 form the second bridge arm of the first bridge output unit 20. The second bridge output unit 40 includes a third bridge arm and a fourth bridge arm. Each bridge arm of the second bridge output unit 40 includes a switch transistor and a freewheeling diode connected in series. As shown in Figure 1, the third switch transistor 402 and the third freewheeling diode 404 form the third bridge arm of the second bridge output unit 40, and the fourth switch transistor 408 and the fourth freewheeling diode 406 form the fourth bridge arm of the second bridge output unit 40.

In an implementation, the first freewheeling diode, the second freewheeling diode, the third freewheeling diode, and the fourth freewheeling diode all function to automatically freewheeling when the switch transistor is turned off, ensuring that there will be no direct shortcircuit in the bridge arm. For example, when the first switch transistor is turned off, the first freewheeling diode automatically freewheeling to ensure that there is no short circuit in the first bridge arm. In an embodiment of the present disclosure, each bridge arm is deployed with a switch transistor and a freewheeling diode connected in series. This deploy method is applicable to a case of unidirectional current and bidirectional voltage, i.e., two quadrant output. In order to achieve four quadrant output, the freewheeling diode on each bridge arm may be replaced with an IGBT switch transistor, that is, the first bridge output unit and the second bridge output unit are modified from a semi-controlled half bridge circuit to a fully-controlled full bridge circuit. In this case, the first bridge arm and the second bridge arm of the first bridge output unit each includes two switch transistors, and the third bridge arm and the fourth bridge arm of the second bridge output unit each includes two switch transistors.

Based on this, by using a cascaded bridge power supply supplied by the first power capacitor and the second power capacitor, the output voltage and the output current can be flexibly controlled, thus achieving rapid control of the plasma in the plasma experimental device.

Furthermore, in order to accurately control the output voltage and the output current, the output voltage and the output current may be controlled through the operating state of the switch transistor on the bridge arm. Specifically, the first bridge output unit is configured to adjust the first input voltage through the first switch transistor on the first bridge arm and/or the second switch transistor on the second bridge arm, and output the adjusted first input voltage as the first output voltage. The second bridge output unit is configured to adjust the second input voltage through the third switch on the third bridge arm and/or the fourth switch on the fourth bridge arm, and output the adjusted second input voltage as the second output voltage.

In practice, the first bridge output unit and the second bridge output unit may control the switch transistor to be turned on or off by using the pulse width modulation (PWM) mode, so as to change the output of the power supply. In an embodiment, the output is a three-level stepped wave (-U, 0, +U) with the input capacitor voltage U as the unit. The relationship between the output voltage of the power supply and the first switch, the second switch, the third switch, and the fourth switch is shown in Table 1.

**Table 1**

| Output voltage Uo | Turn on switch transistors (IGBTs ON) |
|---|---|
| U1+U2 | First switch transistor, second switch transistor, third switch transistor, and fourth switch transistor |
| U1 | First switch transistor, second switch transistor, third switch transistor |
| U1-U2 | prohibit |
| U2 | First switch transistor, third switch transistor, fourth switch transistor |
| 0 | First switch transistor and third switch transistor; or second switch transistor and fourth switch transistor |
| -U2 | Second switch transistor |
| U2-U1 | prohibit |
| -U1 | Fourth switch transistor |
| -U1-U2 | Turn off all the switch transistors |

The output voltage Uo may be considered as being generated based on the first output voltage U1 outputted by the first bridge output unit and the second output voltage U2 outputted by the second bridge output unit. As shown in Figure 1, the output voltage Uo is a voltage across the load 50. In an embodiment of the present disclosure, the load 50 may be considered as a PF coil, that is, the load 50 in Figure 1 includes a resistor and an inductor. It is to be noted that the composition of the load is not limited in the present disclosure. The power circuit according to the present disclosure is configured to supply an output voltage and an output current to the load.

In a case that the first switch transistor 202, the second switch transistor 208, the third switch transistor 402, and the fourth switch transistor 408 are all turned on, the output voltage Uo is U1+U2. In a case that the first switch transistor 202, the second switch transistor 208, and the third switch transistor 402 are all turned on, and the other switch transistor is turned off, the output voltage Uo is U1. In a case that the first switch transistor 202, the third switch transistor 402, and the fourth switch transistor 408 are all turned on, and the other switch transistor is turned off, the output voltage Uo is U2. In a case that the first switch transistor 202 and the third switch transistor 402 are both turned on, and the remaining switch transistors are both turned off, or in a case that the second switch transistor 208 and the fourth switch transistor 408 are both turned on, and the remaining switch transistors are turned off, the output voltage is 0. In a case that the second switch transistor 208 is turned on and the remaining switch transistors are all turned off, the output voltage is -U2. In a case that the fourth switch transistor 408 is turned on and the remaining switch transistors are all turned off, the output voltage Uo is -U1. In a case that the switch transistors are all turned off, the output voltage Uo is -U1-U2. It should be noted that in order to avoid energy backflow between the capacitors, which may cause device damage, the switching modes U1-U2 and U2-U1 are disabled.

Based on this, by controlling the operation states of the switch transistors in the first bridge output unit and the second bridge output unit, the output voltage can be accurately adjusted, facilitating precise control on the plasma subsequently.

Furthermore, in order to ensure that the output voltage can be controlled based on the on/off of the switch transistors, it is required to determine a connection manner of the switch transistors in the bridge output unit. Specifically, an emitter of the first switch transistor is connected to a cathode of the first freewheeling diode, and a collector of the first switch transistor is connected to a cathode of the second freewheeling diode, an emitter of the second switch transistor is connected to an anode of the first freewheeling diode, and a collector of the second switch transistor is connected to an anode of the second freewheeling diode; an emitter of the third switch transistor is connected to a cathode of the third freewheeling diode, a collector of the third switch transistor is connected to a cathode of the fourth freewheeling diode, an emitter of the fourth switch transistor is connected to an anode of the third freewheeling diode, and a collector of the fourth switch transistor is connected to an anode of the fourth freewheeling diode.

Referring to Figure 1, in the first bridge output unit 20, an emitter of the first switch transistor 202 is connected to a cathode of the first freewheeling diode 204, and a collector of the first switch transistor 202 is connected to a cathode of the second freewheeling diode 206; an emitter of the second switch transistor 208 is connected to an anode of the first freewheeling diode 204, and a collector of the second switch transistor 208 is connected to an anode of the second freewheeling diode 206.

In the second bridge output unit 40, an emitter of the third switch transistor 402 is connected to a cathode of the third freewheeling diode 404, and a collector of the third switch transistor 402 is connected to a cathode of the fourth freewheeling diode 406; an emitter of the fourth switch transistor 408 is connected to an anode of the third freewheeling diode 404, and a collector of the fourth switch transistor 408 is connected to an anode of the fourth freewheeling diode 406.

Based on this, with the above connection between the switch transistors and the freewheeling diodes, the output voltage can be controlled through the switch transistors, thereby preventing short circuit in the bridge arm caused when the switch transistor is turned off, thus ensuring the normal operation of the power circuit.

Furthermore, in order to ensure that the first bridge output unit and the second bridge output unit can output the output voltage, it is required to determine an output terminal in the first bridge output unit and the second bridge output unit. Specifically, a connection point between the first switch transistor and the first freewheeling diode serves as a first positive output terminal of the first bridge output unit, a connection point between the second switch transistor and the second freewheeling diode serves as a first negative output terminal of the first bridge output unit; a connection point between the third switch transistor and the third freewheeling diode serves as a second positive output terminal of the second bridge output unit, and a connection point between the fourth switch transistor and the fourth freewheeling diode serves as a second negative output terminal of the second bridge output unit.

The first positive output terminal and the first negative output terminal may be considered as two output terminals of the first bridge output unit, which are used to output the first output voltage of the first bridge output unit. The second positive output terminal and the second negative output terminal may be considered as two output terminals of the second bridge output single terminal, which are used to output the second output voltage of the second bridge output unit.

In an implementation, a connection point between the first switch transistor 202 and the first freewheeling diode 204 serves as a first positive output terminal of the first bridge output unit 20, as shown in Figure 1, a point A is a connection point between the first switch transistor 202 and the first freewheeling diode 204 in Figure 1. A connection point between the second switch transistor 208 and the second freewheeling diode 206 serves as a first negative output terminal of the first bridge output unit 20, a point B is a connection point between the second switch transistor 208 and the second freewheeling diode 206 in Figure 1. A connection point between the third switch transistor 402 and the third freewheeling diode 404 serves as a second positive output terminal of the second bridge output unit 40, a point C is a connection point between the third switch transistor 402 and the third freewheeling diode 404 in Figure 1. A connection point between the fourth switch transistor 408 and the fourth freewheeling diode 406 serves as a second negative output terminal of the second bridge output unit 40, a point D is a connection point between the fourth switch transistor 408 and the fourth freewheeling diode 406 in Figure 1.

In an embodiment of the present disclosure, the power circuit is a cascaded bridge power supply supplied by the first power capacitor and the second power capacitor. Therefore, an output terminal of the first bridge output unit is connected to an output terminal of the second bridge output unit, thereby outputting a three-level stepped wave. Specifically, the first positive output terminal is a positive circuit output terminal, the first negative output terminal is connected to the second positive output terminal, and the second negative output terminal is a negative circuit output terminal.

The positive circuit output terminal may be considered as a positive output terminal of the power circuit, and the negative circuit output terminal may be considered as a negative output terminal of the power circuit. The first positive output terminal of the first bridge output unit 20 is used as the positive circuit output terminal, and the first negative output terminal of the first bridge output unit 20 is connected to the second positive output terminal of the second bridge output unit 40. The second negative output terminal of the second bridge output unit 40 is used as the negative circuit output terminal, the output voltage Uo of the circuit which is generated based on the first output voltage outputted by the first bridge output unit 20 and the second output voltage outputted by the second bridge output unit 40 may be obtained through the positive circuit output terminal and negative circuit output terminal.

In practice, with a conventional structure in which two bridge units are connected in series, 5 output levels can be obtained, while with a circuit topology structure in which hybrid input are used and bridge units are connected in series (2H bridge module), the levels can be increased to 7, thereby smoothing the output waveform.

Furthermore, in order to ensure that the first power supply capacitor can supply power to the first bridge output unit, and the second power supply capacitor can supply power to the second bridge output unit, it is required to connect the first power supply capacitor and the first bridge output unit in parallel, and connect the second power supply capacitor and the second bridge output unit in parallel. Specifically, a positive electrode of the first power supply capacitor is connected to the collector of the first switch transistor, a negative electrode of the first power supply capacitor is connected to the emitter of the second switch transistor; and a positive electrode of the second power supply capacitor is connected to the collector of the third switch transistor, and a negative electrode of the second power supply capacitor is connected to the emitter of the fourth switch transistor.

A positive electrode of the first power supply capacitor 102 is connected to the collector of the first switch transistor 202, and a negative electrode of the first power supply capacitor 102 is connected to the emitter of the second switch transistor 208, so that the first power supply capacitor 102 can be connected with the first bridge output unit 20 in parallel, and the first power supply capacitor 102 can supply the first input voltage to the first bridge output unit 20. A positive electrode of the second power supply capacitor 302 is connected to the collector of the third switch transistor, and a negative electrode of the second power supply capacitor 302 is connected to the emitter of the second switch transistor 408, so that the second power supply capacitor 302 can be connected in parallel with the second bridge output unit 20, and the second power supply capacitor 302 can supply the second input voltage to the second bridge output unit 40

Based on this, by connecting the first power supply capacitor with the first bridge output unit in parallel, the first power supply capacitor can supply the first input voltage to the first bridge output unit, facilitating the first bridge output unit to output the first output voltage based on the first input voltage subsequently. By connecting the second power supply capacitor with the second bridge output unit in parallel, the second power supply capacitor can supply a second input voltage to the second bridge output unit, facilitating the second bridge output unit to output the second output voltage based on the second input voltage subsequently.

Furthermore, in order to avoid the damage to the power supply capacitor caused by an induced current generated by an inductance in a coil when the switch transistor is turned off, i.e. the current outputted by the circuit output decreases, a rectifier diode may be connected with the power supply capacitor in parallel. Specifically, the circuit further includes a first rectifier diode and a second rectifier diode, the first rectifier diode is connected with the first power supply capacitor in parallel, and the second rectifier diode is connected with the second power supply capacitor in parallel.

The first rectifier diode is connected with the first power supply capacitor in parallel, and the second rectifier diode is connected with the second power supply capacitor in parallel. In practice, when the output current decreases, an inductance in a coil of the load may generate an induced current. In order to prevent induced current from causing reverse damage to the power supply capacitor, a rectifier diode may be connected with the power supply capacitor in parallel in a reversed manner. Specifically, as shown in Figure 1, the first rectifier diode 104 is connected with the first power supply capacitor 102 in parallel, and the second rectifier diode 304 is connected with the second power supply capacitor 302 in parallel, so that the reversed induced current can flow in and out of the rectifier diode, avoiding reverse voltage damage to the power supply capacitor.

Furthermore, in order to ensure that the power supply capacitor can discharge normally to supply input voltage to the bridge output unit, it is required to charge the power supply capacitor. Specifically, the circuit further includes a first charging unit and a second charging unit. The first charging unit is connected with the first power supply capacitor in parallel, and the second charging unit is connected with the second power supply capacitor in parallel. The first charging unit is configured to supply a first charging current to the first power supply capacitor, and the second charging unit is configured to supply a second charging current to the second power supply capacitor.

The first charging unit may be considered as a charging module for charging the first charging capacitor, and the second charging unit may be considered as a charging module for charging the second charging capacitor. In practice, the first charging unit and the second charging unit may be programmable DC power supplies. In a case that the power supply capacitor is to be charged, the power supply capacitor is supplied through a programmable DC power supply. In an implementation, the first charging unit is connected with the first power supply capacitor 102 in parallel, and the second charging unit is connected with the second power supply capacitor 302 in parallel.

Based on this, by connecting a charging unit with the power supply capacitor in parallel, the power supply capacitor can be charged, ensuring that the power supply capacitor can discharge normally to supply the input voltage for the bridge output unit subsequently.

Furthermore, in order to accurately control the output voltage, it is required to precisely control an operating state of each switch transistor in the bridge output unit. Specifically, the circuit further includes a control unit, which is connected to the first bridge output unit and the second bridge output unit. The control unit is configured to send a control signal to each of the first bridge output unit and the second bridge output unit, where the control signal is used to control the operating state of the switch transistor in the first bridge output unit and/or the second bridge output unit.

The control unit may be considered as a unit module that sends a control signal to the bridge output unit. The control signal may cause the switch transistors in the bridge output unit to operate in different states, for example, a turned-on state or a turned-off state.

In practice, the control unit includes a high-performance microcontroller unit (MCU). The MCU collects a capacitor voltage across the power supply capacitor, an output voltage and an output current on the load side, and generates a PWM signal to drive the IGBT switch transistor in the bridge output unit, thereby controlling the switch transistor to be turned on or off, thus adjusting the output voltage and the output current according to actual needs.

In an implementation, the control unit may also communicate with an upper computer through a serial port, and display monitoring information of the power circuit to the user through the upper computer, such as an input voltage, an output voltage, an output current, and the operating state of each switch transistor, so that the user can understand the current operating state of the power circuit.

The power circuit according to the present disclosure includes a first power supply capacitor, a first bridge output unit connected to the first power supply capacitor, a second power supply capacitor, and a second bridge output unit connected to the second power supply capacitor. Each of the first bridge output unit and the second bridge output unit includes two bridge arms, each of the bridge arms includes at least one switch transistor. The first bridge output unit is connected to an output terminal of the second bridge output unit. The first power supply capacitor is configured to supply a first input voltage to the first bridge output unit, and the second power supply capacitor is configured to supply a second input voltage to the second bridge output unit. The first bridge output unit is configured to adjust the first input voltage through at least one switch transistor on the bridge arm, and output the adjusted first input voltage as the first output voltage, and the second bridge output unit is configured to adjust the second input voltage through at least one switch transistor on the bridge arm, and output the adjusted second input voltage as the second output voltage. By using the first power supply capacitor and the second power supply capacitor as energy storage units, and adjusting the input voltage by using the first bridge output unit and second bridge output unit, thereby flexibly controlling the output voltage of power supply with a simple circuit structure, which is relatively simple, easy to implement, and highly reliable.

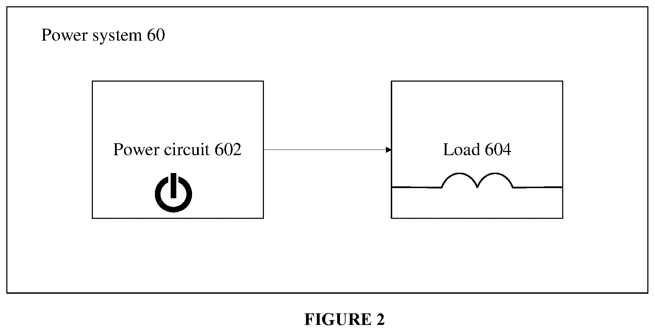

Based on the power circuit according to the above embodiments, a power system is further provided according the present disclosure, which includes the power circuit according to any one of the above embodiments, and a load. Reference is made to Figure 2, which is a schematic diagram of a power system according to an embodiment of the present disclosure. The power system 60 includes a power circuit 602 and a load 604, and the power circuit 602 is configured to supply an output voltage and an output current to the load 604.

In an embodiment, the power circuit 602 includes a first power supply capacitor, a first bridge output unit connected to the first power supply capacitor, a second power supply capacitor, and a second bridge output unit connected to the second power supply capacitor. Each of the first bridge output unit and the second bridge output unit includes two bridge arms, and each of the bridge arms includes at least one switch transistor. The first bridge output unit is connected to an output terminal of the second bridge output unit. The first power supply capacitor is configured to supply a first input voltage to the first bridge output unit, and the second power supply capacitor is configured to supply a second input voltage to the second bridge output unit. The first bridge output unit is configured to adjust the first input voltage through the at least one switch transistor on the bridge arm, and output the adjusted first input voltage as the first output voltage, and the second bridge output unit is configured to adjust the second input voltage through the at least one switch transistor on the bridge arm, and output the adjusted second input voltage as the second output voltage.

In an embodiment, the first bridge output unit includes a first bridge arm and a second bridge arm connected in parallel, the first bridge arm includes a first switch transistor and a first freewheeling diode connected in series, and the second bridge arm includes a second switch transistor and a second freewheeling diode connected in series. The second bridge output unit includes a third bridge arm and a fourth bridge arm connected in parallel, the third bridge arm includes a third switch transistor and a third freewheeling diode connected in series, and the fourth bridge arm includes a fourth switch transistor and a fourth freewheeling diode connected in series.

In an embodiment, the first bridge output unit is configured to adjust the first input voltage through the first switch transistor on the first bridge arm and/or the second switch transistor on the second bridge arm, and output the adjusted first input voltage as the first output voltage. The second bridge output unit is configured to adjust the second input voltage through the third switch transistor on the third bridge arm and/or the fourth switch transistor on the fourth bridge arm, and output the adjusted second input voltage as the second output voltage.

In an embodiment, an emitter of the first switch transistor is connected to a cathode of the first freewheeling diode, a collector of the first switch transistor is connected to a cathode of the second freewheeling diode. An emitter of the second switch transistor is connected to an anode of the first freewheeling diode, and a collector of the second switch transistor is connected to an anode of the second freewheeling diode. An emitter of the third switch transistor is connected to a cathode of the third freewheeling diode, a collector of the third switch transistor is connected to a cathode of the fourth freewheeling diode. An emitter of the fourth switch transistor is connected to an anode of the third freewheeling diode, and a collector of the fourth switch transistor is connected to an anode of the fourth freewheeling diode.

In an embodiment, a connection point between the first switch transistor and the first freewheeling diode serves as a first positive output terminal of the first bridge output unit, and a connection point between the second switch transistor and the second freewheeling diode serves as a first negative output terminal of the first bridge output unit. A connection point between the third switch transistor and the third freewheeling diode serves as a second positive output terminal of the second bridge output unit, and a connection point between the fourth switch transistor and the fourth freewheeling diode serves as a second negative output terminal of the second bridge output unit.

In an embodiment, the first positive output terminal serves as a positive circuit output terminal, the first negative output terminal is connected to the second positive output terminal, and the second negative output terminal serves as a negative circuit output terminal.

In an embodiment, a positive electrode of the first power supply capacitor is connected to the collector of the first switch transistor, and a negative electrode of the first power supply capacitor is connected to the emitter of the second switch transistor. A positive electrode of the second power supply capacitor is connected to the collector of the third switch transistor, and a negative electrode of the second power supply capacitor is connected to the emitter of the fourth switch transistor.

In an embodiment, the power circuit 602 further includes a first rectifier diode and a second rectifier diode. The first rectifier diode is connected with the first power supply capacitor in parallel, and the second rectifier diode is connected with the second power supply capacitor in parallel.

In an embodiment, the power circuit 602 further includes a first charging unit and a second charging unit. The first charging unit is connected with the first power supply capacitor in parallel, and the second charging unit is connected with the second power supply capacitor in parallel. The first charging unit is configured to supply a first charging current to the first power supply capacitor, and the second charging unit is configured to supply a second charging current to the second power supply capacitor.

In an embodiment, the power circuit 602 further includes a control unit, which is connected to the first bridge output unit and the second bridge output unit. The control unit is configured to send a control signal to each of the first bridge output unit and the second bridge output unit, where the control signal is used to control an operating state of a switch transistor in the first bridge output unit and/or the second bridge output unit.

A power system is further provided according to the present disclosure, which use the first power supply capacitor and the second power supply capacitor as energy storage units, and adjusts the input voltage by using the bridge output unit first and the second bridge output unit, thereby flexibly controlling the output voltage. The power circuit has a relatively simple structure, is easy to implement, and has high reliability.

The embodiments according to the present disclosure are described in a progressive manner, and each embodiment focuses on the differences from other embodiments. The same and similar parts between the embodiments may be referred to each other. The above description of the embodiments enables those skilled in art to implement or use the present disclosure. Various modifications to these embodiments will be apparent to those skilled in art, and the general principles defined in this specification may be implemented in other embodiments without departing from the notions or scope of the present disclosure. Therefore, the present disclosure will not be limited to the embodiments shown herein, but rather to the widest scope consistent with the principles and novel features described herein.

It is to be noted that for the convenience of description, the embodiments of the method are all expressed as a series of operation combinations. However, those skilled in the art should be aware that the embodiments of the present disclosure are not limited by the order of the described operations, as according to the embodiments of the present disclosure, certain steps may be performed in another sequence or simultaneously. Secondly, those skilled in the art should also be aware that the embodiments described in the present disclosure are all preferred embodiments, and the operations and modules involved may not necessarily be necessary for the embodiments in the present disclosure.

In the above embodiments, the description of each embodiment has its own emphasis. For parts that are not detailed in one embodiment, reference may be made to the relevant description of another embodiment.

The preferred embodiments disclosed above are only intended to assist in explaining the present disclosure. Not all the details of the embodiments are described, and the present disclosure is not limited to the specific embodiments described above. Apparently, according to the embodiments of the present disclosure, many modifications and changes may be made. These embodiments are selected and specifically described in the present disclosure to better explain the principles and practice of the embodiments, so that those skilled in the art can better understand and utilize the present disclosure. The present disclosure is only limited by the claims and all their scope and equivalents.

## Claims

1. A power circuit, comprising:
a first power supply capacitor;
a first bridge output unit connected to the first power supply capacitor;
a second power supply capacitor; and
a second bridge output unit connected to the second power supply capacitor, wherein
each of the first bridge output unit and the second bridge output unit comprises two bridge arms, each of the two bridge arms comprises at least one switch transistor, and the first bridge output unit is connected to an output terminal of the second bridge output unit, and wherein
the first power supply capacitor is configured to supply a first input voltage to the first bridge output unit;
the second power supply capacitor is configured to supply a second input voltage to the second bridge output unit;
the first bridge output unit is configured to adjust the first input voltage through the at least one switch transistor on the bridge arm, and output the adjusted first input voltage as a first output voltage; and
the second bridge output unit is configured to adjust the second input voltage through the at least one switch transistor on the bridge arm, and output the adjusted second input voltage as a second output voltage.

2. The power circuit according to claim 1, wherein
the first bridge output unit comprises a first bridge arm and a second bridge arm connected in parallel, the first bridge arm comprises a first switch transistor and a first freewheeling diode connected in series, and the second bridge arm comprises a second switch transistor and a second freewheeling diode connected in series; and
the second bridge output unit comprises a third bridge arm and a fourth bridge arm connected in parallel, the third bridge arm comprises a third switch transistor and a third freewheeling diode connected in series, and the fourth bridge arm comprises a fourth switch transistor and a fourth freewheeling diode connected in series.

3. The power circuit according to claim 2, wherein the first bridge output unit is configured to adjust the first input voltage through the first switch transistor on the first bridge arm and/or the second switch transistor on the second bridge arm, and output the adjusted first input voltage as the first output voltage; and
the second bridge output unit is configured to adjust the second input voltage through the third switch transistor on the third bridge arm and/or the fourth switch transistor on the fourth bridge arm, and output the adjusted second input voltage as the second output voltage.

4. The power circuit according to claim 2, wherein an emitter of the first switch transistor is connected to a cathode of the first freewheeling diode, a collector of the first switch transistor is connected to a cathode of the second freewheeling diode, an emitter of the second switch transistor is connected to an anode of the first freewheeling diode, and a collector of the second switch transistor is connected to an anode of the second freewheeling diode; and
an emitter of the third switch transistor is connected to a cathode of the third freewheeling diode, a collector of the third switch transistor is connected to a cathode of the fourth freewheeling diode, an emitter of the fourth switch transistor is connected to an anode of the third freewheeling diode, and a collector of the fourth switch transistor is connected to an anode of the fourth freewheeling diode.

5. The power circuit according to claim 2, wherein a connection point between the first switch transistor and the first freewheeling diode serves as a first positive output terminal of the first bridge output unit, and a connection point between the second switch transistor and the second freewheeling diode serves as a first negative output terminal of the first bridge output unit; and
a connection point between the third switch transistor and the third freewheeling diode serves as a second positive output terminal of the second bridge output unit, and a connection point between the fourth switch transistor and the fourth freewheeling diode serves as a second negative output terminal of the second bridge output unit.

6. The power circuit according to claim 5, wherein the first positive output terminal serves as a positive circuit output terminal, the first negative output terminal is connected to the second positive output terminal, and the second negative output terminal serves as a negative circuit output terminal.

7. The power circuit according to claim 2, wherein a positive electrode of the first power supply capacitor is connected to a collector of the first switch transistor, and a negative electrode of the first power supply capacitor is connected to an emitter of the second switch transistor; and
a positive electrode of the second power supply capacitor is connected to a collector of the third switch transistor, and a negative electrode of the second power supply capacitor is connected to an emitter of the fourth switch transistor.

8. The power circuit according to claim 1, further comprising:
a first rectifier diode, connected with the first power supply capacitor in parallel; and
a second rectifier diode, connected with the second power supply capacitor in parallel.

9. The power circuit according to claim 1, further comprising:
a first charging unit, connected with the first power supply capacitor in parallel and configured to supply a first charging current to the first power supply capacitor; and
a second charging uni, connected with the second power supply capacitor in parallel and configured to supply a second charging current to the second power supply capacitor.

10. The power circuit according to claim 1, further comprising a control unit, wherein
the control unit is connected to the first bridge output unit and the second bridge output unit; and
the control unit is configured to send a control signal to each of the first bridge output unit and the second bridge output unit, wherein the control signal is used to control an operating state of a switch transistor in the first bridge output unit and/or the second bridge output unit.

11. A power system, comprising:
the power circuit according to any one of claims 1 to 10; and
a load.
